(19) Europäisches Patentamt / European Patent Office / Office européen des brevets

(11) **EP 2 218 054 B1**

(12) **EUROPEAN PATENT SPECIFICATION**

(45) Date of publication and mention
of the grant of the patent:
**04.01.2012 Bulletin 2012/01**

(21) Application number: **08806377.1**

(22) Date of filing: **24.09.2008**

(51) Int Cl.:
*G06T 7/00* (2006.01)

(86) International application number:
**PCT/GB2008/003223**

(87) International publication number:
**WO 2009/040514 (02.04.2009 Gazette 2009/14)**

(54) **OBJECT REGISTRATION**

OBJEKTREGISTRIERUNG

RECALAGE D'OBJETS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.09.2007 GB 0718590**

(43) Date of publication of application:
**18.08.2010 Bulletin 2010/33**

(73) Proprietor: **The University Court Of The University Of Edinburgh**
**Edinburgh EH8 9TA (GB)**

(72) Inventors:
• **HEAVENS, Alan, Francis**
  **Roslin, Midlothian EH25 9NJ (GB)**
• **PANTER, Benjamin, David**
  **Morningside**
  **Edinburgh EH10 4SY (GB)**
• **TWEEDIE, Robert, John**
  **Edinburh EH9 3EN (GB)**
• **HOSSACK, William, James**
  **Edinburgh EH9 2HR (GB)**
• **BASTIN, Mark, Elliott**
  **Edinburgh EH4 3HQ (GB)**

(74) Representative: **Peter, Kenneth William**
**Murgitroyd & Company**
**Scotland House**
**165-169 Scotland Street**
**Glasgow G5 8PL (GB)**

(56) References cited:

• **YOSHIMURA S ET AL: "Fast template matching based on the normalized correlation by using multiresolution eigenimages" INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CO NFERENCE ON MUNICH, GERMANY 12-16 SEPT. 1994, NEW YORK, NY, USA,IEEE, vol. 3, 12 September 1994 (1994-09-12), pages 2086-2093, XP010142022 ISBN: 978-0-7803-1933-2**

• **BROWN L G: "A SURVEY OF IMAGE REGISTRATION TECHNIQUES" ACM COMPUTING SURVEYS, ACM, NEW YORK, NY, US, US, vol. 24, no. 4, 1 December 1992 (1992-12-01), pages 325-376, XP000561460 ISSN: 0360-0300**

• **HIROSHI MURASE ET AL: "THREE-DIMENSIONAL OBJECT RECOGNITION FROM APPEARANCE-PARAMETRIC EIGENSPACE METHOD" SYSTEMS & COMPUTERS IN JAPAN, WILEY, HOBOKEN, NJ, US, vol. 26, no. 8, 1 July 1995 (1995-07-01), pages 45-54, XP000527373 ISSN: 0882-1666**

• **BOROTSCHNIG H ET AL: "APPEARANCE-BASED ACTIVE OBJECT RECOGNITION" IMAGE AND VISION COMPUTING, GUILDFORD, GB, vol. 18, 1 January 2000 (2000-01-01), pages 715-727, XP001197116 ISSN: 0262-8856**

• **SCHWEITZER H: "Optimal eigenfeature selection by optimal image registration" 19990623; 19990623 - 19990625, vol. 1, 23 June 1999 (1999-06-23), pages 219-224, XP010347650**

- LAKSHMANAN S ET AL: "Comparison between eigenfaces and fisherfaces for estimating driver pose" INTELLIGENT TRANSPORTATION SYSTEMS, 2001. PROCEEDINGS. 2001 IEEE AUGUST 25-29, 2001, PISCATAWAY, NJ, USA, IEEE, 25 August 2001 (2001-08-25), pages 889-894, XP010555891 ISBN: 978-0-7803-7194-1

**Description**

The present invention relates to a process of bringing at least one subject data set into registration or conformity with a reference data set by electronic methods, a computer program comprising program instructions for causing a computer to perform the same process, and electrical apparatus operative to bring at least one subject data set into registration or conformity with a reference data set.

Background to the invention

A Magnetic Resonance Imaging (MRI) scanner may be used to acquire a series of two or three dimensional images of a part, such as the head, of a human or animal subject. A reconstruction of the part of the human or animal subject may be formed by superimposing the acquired two or three dimensional images. Acquiring sufficient two or three dimensional images to form a required reconstruction can take a considerable period of time. During such time, the human or animal subject is liable to move with such movement requiring registration of the acquired images with each other to form a properly reconstructed image. Also, under certain circumstances operation of the MRI scanner can cause distortion of an acquired image, which requires processing of the distorted image to bring it into conformity with the other acquired images.

It is known to bring images into registration with each other, cf. e.g. Yoshimura et al., 1334, pp. 2086-2093, ISBN: 978-0-7803-1933-2, XP010142022. According to such known approaches, the images are acquired and the registration is performed after the acquisition of the images. The present inventors have appreciated that such known approaches to image registration have shortcomings.

It is therefore an object for the present invention to provide a process of bringing at least one subject data set into registration or conformity with a reference data set by electronic methods, each data set being a representation, e.g. an image, of a respective object, such as part of the human or animal body.

It is a further object for the present invention to provide electrical apparatus operative to bring at least one subject data set into registration or conformity with a reference data set, each data set being a representation, e.g. an image, of a respective object, such as part of the human or animal body.

Statement of invention

The present invention is defined by the appended claims and has been devised in the light of the inventors' appreciation of shortcomings of known registration approaches. Thus, according to a first aspect of the present invention, there is provided a process according to claim 1.

In use, the application of the inverse of the determined transformation may bring the subject data set substantially into registration or conformity with the reference data set. Also, the application of the inverse of the determined transformation to the subject data set may provide a registered or conforming subject data set.

The process of the present invention may provide for a significant lightening of the computational burden compared with known approaches to data set registration. For example, a three-dimensional reference data set may comprise 512 by 512 by 54 elements and 500,000 candidate data sets may be formed from the reference data set. In contrast, the transformation may have a comparatively small number of predetermined variables, e.g. twelve variables, which means a compressed subject data set has twelve elements and each compressed candidate data set has twelve elements. Thus, the computational burden of comparing a compressed subject data set with each compressed candidate data set is significantly lighter than the computational burden of comparing a subject data set with each candidate data set. Hence, the process of the present invention may be performed in real time, e.g. during acquisition of images from an MRI scanner instead of waiting for completion of the acquisition of the images before registration is started. In forms of the invention, a transformation may consist of a complement of variables and the predetermined number of variables may be fewer than the complement of variables. For example, the complement of variables may consist of twelve variables and the predetermined variables may consist of six variables; thus, the compression may involve only six of the twelve variables.

The step of determining a plurality of weights may comprise determining a rate of change of a data set, which is undergoing compression, with respect to at least one of the predetermined variables. The rate of change may have the form of a vector. More specifically, each of the plurality of weights may be determined in dependence on a rate of change of the data set with respect to a respective one of the predetermined variables.

Alternatively or in addition, the rate of change of a data set may be determined by: applying each of a plurality of predetermined values for a predetermined variable to the data set to form corresponding intermediate data sets; and determining the rate of change on the basis of the intermediate data sets. The plurality of predetermined values may consist of two predetermined values. Thus, a rate of change of a data set may be determined by: applying a predetermined value that is lower, e.g. 0.99, than a nominal value, such as unity, and a predetermined value that is higher, e.g. 1.01, than the nominal value to the data set to form a first intermediate data set and a second intermediate data set respectively; determining a difference between the first intermediate data set and the second intermediate data set to form a difference data set; and dividing the difference data set by a difference between the lower and higher predetermined values. Thus, where each of the plurality of weights is determined in dependence on a rate of change of the data set with respect to a respective one of the predetermined variables, a rate of change of the data set is formed for each of the plurality of predetermined variables.

Alternatively or in addition, a first weighting vector may be determined in dependence on a first rate of change determined with respect to a first predetermined variable and a second weighting vector may be determined in dependence on the first weighting vector and a second rate of change determined with respect to a second predetermined variable. More specifically, the second weighting vector may be determined in dependence on subtraction of a product of the first weighting vector and a transpose of the second rate of change from the second rate of change.

Alternatively or in addition, a third weighting vector may be determined in dependence on the first and second weighting vectors and a third rate of change determined with respect to a third predetermined variable. Thus, a subsequent weighting vector may be determined in dependence on all previously determined weighting vectors and a subsequent rate of change determined with respect to a subsequent predetermined variable. More specifically, the third weighting vector may be determined in dependence on: summing a product of the first weighting vector and a transpose of the third rate of change and a product of the second weighting vector and a transpose of the third rate of change; and subtracting the summation from the third rate of change. Thus, a subsequent weighting vector may be determined in dependence on: summing products of each previously determined weighting vector with a transpose of the subsequent rate of change; and subtracting the summation from the subsequent rate of change.

Alternatively or in addition, the step of determining a plurality of weights may further comprise determining a noise vector, the noise vector being determined on the basis of noise present in a data set undergoing compression. More specifically, the noise vector may be determined on the basis of white noise of predetermined amplitude being present in the data set undergoing compression.

Alternatively or in addition, the step of determining a plurality of weights may further comprise determining a noise covariance matrix. More specifically, a weighting vector may be determined in dependence on a product of a corresponding rate of change and the noise covariance matrix. Alternatively or in addition, the noise covariance matrix may be a diagonal matrix having a value of $1/\sigma^2$ for each element in the main diagonal.

Alternatively or in addition, a data set undergoing compression may comprise N elements of data, the N elements of data being represented by a vector $x_i$, i=1, ... N. Alternatively or in addition, the plurality of variables may comprise M variables. More specifically, the plurality of weighting vectors may consist of M vectors $b_m$, m=1, ... M.

Alternatively or in addition, a first weighting vector may be:

$$b_1 = C^{-1} \, \mu_{,1} / \sqrt{\mu'_{,1} C^{-1} \, \mu_{,1}}$$

and each subsequent weighting vector may be:

$$b_m = (C^{-1} \, \mu_{,m} - \sum_{q=1}^{m-1} (\mu'_{,m} b_q) b_q) / \sqrt{\mu'_{,m} C^{-1} \, \mu_{,m} - \sum_{q=1}^{m-1} (\mu'_{,m} b_q)^2}$$

where C is a noise covariance matrix and $\mu_,$ is the rate of change.

Alternatively or in addition, the step of multiplying all data in a candidate or subject data set by each weighting vector may comprise computing the scalar product of the data set and each weighting vector to provide the corresponding, respective data elements.

Alternatively or in addition, the transformation may be one of: an affine transformation; and a warp transformation, such as an elastic transformation.

More specifically, the transformation may be an affine transformation comprising variables for performing at least one of: at least one translation; at least one rotation; at least one scale; and at least one shear. More specifically, the affine transformation may comprise variables for performing: translations in each of three mutually orthogonal directions; rotation about each of three mutually orthogonal axes; scales along each of three mutually orthogonal directions;

and shears along each pair of pairs of three mutually orthogonal directions. Thus, the affine transformation may consist of twelve variables and therefore a compressed data set that has been compressed in dependence on the affine transformation may consist of twelve data elements.

Alternatively or in addition, the step of applying a transformation to a reference data set may comprise multiplying the reference data set with each of a plurality of forms of the transformation, each of the plurality of forms of the transformation having a value for at least one variable that differs from the other forms of the transformation.

Alternatively or in addition, the plurality of candidate data sets may consist of at least 100,000 candidate data sets. The number of predetermined variables may be no more than substantially 100.

Alternatively or in addition, the process may further comprise the step of formatting at least one of the candidate data sets after the step of applying a transformation to the reference data set and before the step of compressing each of the candidate data sets. More specifically, the step of formatting a candidate data set may comprise changing elements of the candidate data set such that the elements of the candidate data set have a same spatial disposition as elements of the reference data set. Alternatively or in addition, changing an element of the candidate data set may comprise interpolation between or amongst elements neighbouring the element being changed. More specifically, interpolation may comprise linear interpolation in at least two dimensions.

Alternatively or in addition, the step of comparing the compressed subject data set with each of the compressed candidate data sets may comprise comparing by means of at least one of: estimation of likelihood; and a chi-squared test.

More specifically, the steps of generating each of a plurality of candidate data sets and compressing the data sets may be repeated such that a larger plurality of candidate data sets are generated from the reference data set than previously, the steps being repeated in dependence on the step of comparing the compressed subject data set with each of the compressed candidate data sets. Thus, if a best match is determined to be insufficiently close for a particular application of the invention, a larger plurality of candidate data sets may be generated, whereby a closer matching candidate data set may be determined.

Alternatively or in addition, the step of comparing the compressed data set may comprise determining a plurality of transformations that have generated candidate data sets corresponding to respective compressed candidate data sets, which, of the plurality of compressed data sets provide best matches with the compressed subject data set. Thus, the process of the present invention may be used to determine a plurality of transformations, e.g. up to 100 of a total number of 500,000 transformations, which of all the transformations provide the best, i.e. closest, matches.

Alternatively or in addition, the process may further comprise determining at least one further candidate data set on the basis of the at least one determined transformation. More specifically, the at least one further candidate data set may be determined on the basis of the at least one respective candidate data set corresponding to the at least one determined transformation. Thus, for example, where three transformations have been determined according to the process, a further candidate data set may be determined for each of the three transformations. A further candidate data set may be compared with the subject data set by means of a goodness of fit method of a kind described herein. Where there is a plurality of further candidate data sets, one of the further candidate data sets may be selected in dependence on the goodness of fit measures for each of the plurality of further candidate data sets.

More specifically, the process may further comprise determining at least one further candidate data set by a univariate method, such as Powells method.

Alternatively or in addition, the process may further comprise filtering at least one of the reference data set and the at least one subject data set by means of a filter. More specifically, the filter may be a low-pass filter. Alternatively or in addition, the filter may be a Gaussian filter. At least one characteristic may be no more than substantially 10% of a corresponding characteristic of the data set being filtered. For example, where a data set represents an image of 250 mm by 250 mm by 250 mm, the depth, height and width characteristics of the filter may be no more than 25 mm by no more than 25 mm by no more than 25 mm respectively. Filtering a data set may have the effect of blurring the representation provided by the data set. The blurring of the representation can improve the effectiveness of the determining of the best match of compressed subject data set with the compressed candidate data sets. Alternatively or in addition, filtering may be used to reduce the size of a data set. For example, filtering may involve taking every second element of a data set. For example, filtering may involve selecting a portion of a data set by an operation such as cropping a data set.

Alternatively or in addition, a data set may be a representation of an object in at least two dimensions.

Alternatively or in addition, the reference data set and the subject data set may be time spaced representations of an object. Alternatively or in addition and where the process comprises bringing each of a plurality of subject data sets into registration or conformity with a reference data set, the plurality of subject data sets may be time spaced representations of an object.

Alternatively or in addition, a data set may be representation of an image, such as an MRI image, of an object, such as a part of the human or animal body.

Alternatively or in addition, the process may further comprise acquiring the at least one subject data set from the object by electronic methods. More specifically, the step of acquiring the at least one subject data set may be performed by at least one of: a MRI scanner; a Computed Tomography (CT) scanner; a Positron Emission Tomography (PET) scanner; ultrasound apparatus; and an X-ray apparatus.

Alternatively or in addition, the process may further comprise acquiring the representation of the at least one subject data set from the object by electronic methods before executing the step of generating each of the plurality of candidate data sets.

Alternatively or in addition, the process may further comprise providing a registered or conforming data set in dependence upon the step of applying the inverse of the determined transformation.

More specifically, the process may further comprise outputting the registered or conforming data set as part of a representation to at least one of: a Visual Display Unit (VDU); a film; and a Picture, Archiving and Communications (PACS) system.

Alternatively or in addition, the process may further comprise converting the registered or conforming data set to a Digital Imaging and Communications in Medicine (DICOM) format.

Alternatively or in addition, the reference data set and the at least one subject data set may have been acquired from different acquisition apparatus. For example, the reference data set may have been acquired by a CT scanner and the at least one subject data set may have been acquired from an MRI scanner. Alternatively or in addition, the reference data set and the at least one subject data set may be representations of different forms of an object. For example, the reference data set may be a representation of a head of a first human subject and the at least one subject data set may be a representation of a head of a second human subject. Alternatively or in addition, the reference data set may be one of: a previously acquired data set of a same kind as the subject data set; and one of a library of stored reference data sets.

The subject data set and the reference data set may be in the form of digital data. The plurality of candidate data sets may be in the form of digital data. The step of generating each of the plurality of candidate data sets may be performed by digital processing. The step of compressing each of the plurality of candidate data sets may be performed by digital processing. The step of comparing the compressed subject data set with each of the compressed candidate data sets may be performed by digital processing. The step of applying the inverse of the determined transformation may be performed by digital processing.

The subject data set and the reference data set may be stored as an electronic signal. The plurality of candidate data sets may be stored as an electronic signal. The compressed data sets may be stored as an electronic signal. Generation of each of a plurality of candidate data sets may be by operation of at least one of: a Central Processing Unit (CPU); and a Graphics Processing Unit (GPU). Compression of a data set may be by operation of at least one of: a Central Processing Unit (CPU); and a Graphics Processing Unit (GPU). Comparing the compressed subject data set with each of the compressed candidate data sets may be by operation of at least one of: a Central Processing Unit (CPU); and a Graphics Processing Unit (GPU). Applying the inverse of the determined transformation may be by operation of at least one of: a Central Processing Unit (CPU); and a Graphics Processing Unit (GPU).

According to a second aspect of the present invention, there is provided a computer program comprising program instructions for causing a computer to perform the process according to the first aspect of the present invention.

More specifically, the computer program may be one of: embodied on a record medium; embodied in a read-only memory; stored in a computer memory; and carried on an electrical carrier signal.

Further embodiments of the second aspect of the present invention may comprise one or more features of the first aspect of the present invention.

According to a third aspect of the present invention, there is provided a computer system comprising program instructions for causing a computer to perform the process according to the first aspect of the present invention.

More specifically, the program instructions may be one of: embodied on a record medium; embodied in a read-only memory; stored in a computer memory; and carried on an electrical carrier signal.

Further embodiments of the third aspect of the present invention may comprise one or more features of the first aspect of the present invention.

According to a fourth aspect of the present invention, there is provided electrical apparatus operative to bring at least one subject data set into registration or conformity with a reference data set according to the first aspect of the present invention, the electrical apparatus comprising a digital processor and a data store, the digital processor being operative to carry out the steps of: generating each of the plurality of candidate data sets; compressing each of the plurality of data sets and compressing the subject data set; comparing the compressed subject data set with each of the compressed candidate data sets; and applying the inverse of the determined transformation, and the data store being operative to store: the at least one subject data set and the reference data set; the plurality of candidate data sets; and the compressed data sets.

More specifically, the electrical apparatus may comprise at least one of: a Central Processing Unit (CPU); and a Graphics Processing Unit (GPU)

Further embodiments of the fourth aspect of the present invention may comprise one or more features of the first aspect of the present invention.

Embodiments of the further aspect of the present invention may comprise one or more features of any previous aspect of the invention.

Brief description of drawings

Further features and advantages of the present invention will become apparent from the following specific description, which is given by way of example only and with reference to the accompanying drawings, in which:

Figure 1 is a block diagram representation of apparatus that is operable according to the present invention;
Figure 2 shows a flow chart representation of a process according to the present invention; and
Figures 3A, 3B and 3C show a reference image, an acquired image and a registered form of the acquired image respectively.

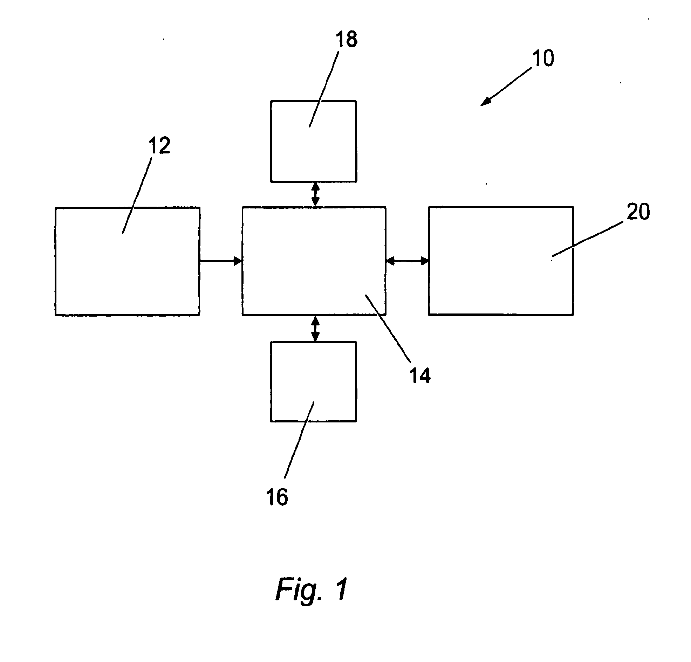

An apparatus 10 that is operable according to the invention is shown in block diagram form in Figure 1. The apparatus 10 comprises a Magnetic Resonance Imaging (MRI) scanner 12, which is operable to acquire images (which constitute representations) from a part of a human or animal subject or indeed of an inanimate object that is susceptible to scanning with an MRI scanner. During acquisition of the images the human or animal subject may move such that the images are out of registration with each other; movement may include rotation or movement from side to side. Also, during acquisition the operation of the MRI scanner may distort images such that the acquired images are out of conformity with each other. Each acquired image is in three dimensions and consists of 512 x 512 x 54 pixels. Each acquired image is conveyed to a Central Processing Unit (CPU) or Graphics Processing Unit (GPU) 14 of well-known form, which forms part of conventional computer apparatus. Each acquired image is stored in digital form as a subject data set, which contains 512 x 512 x 54 data elements, in the data store 16, which is of conventional form and function. As will be described below in detail the stored subject data sets are brought into registration or conformity with each other to thereby allow for their formation as a three dimensional reconstruction of the part of the human or animal body before the reconstruction is either displayed on a Visual Display Unit (VDU) 18 or conveyed to a Picture, Archiving and Communications (PACS) system 20. The CPU or GPU 14 of Figure 1 is a general purpose computer, which is programmed to perform the process of the invention by program instructions of conventional form that are stored in read only memory, computer memory or in a record medium, such as an optical disc.

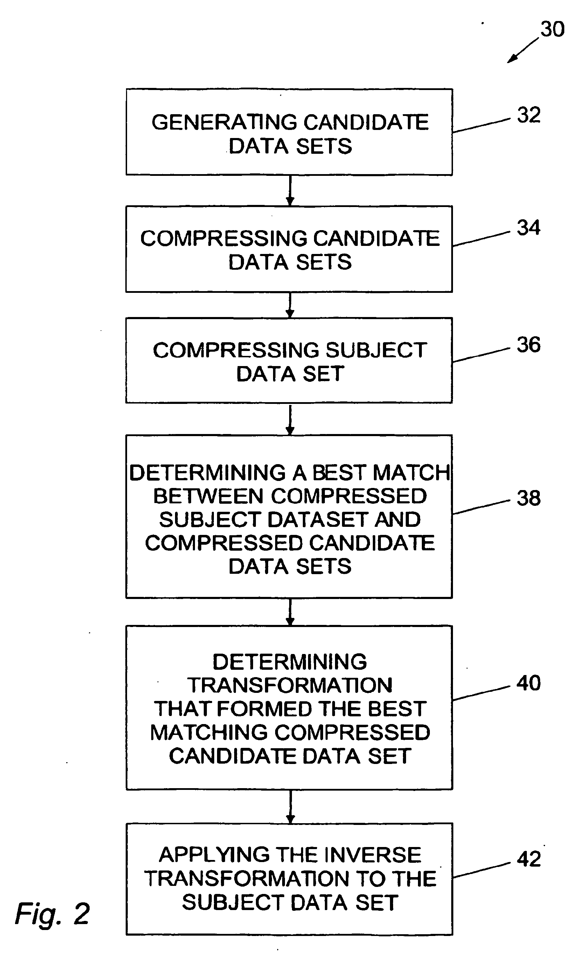

A process according to the present invention will now be described with reference to the flow chart 30 shown in Figure 2 and the block diagram of Figure 1. An affine transformation is applied by the CPU or GPU 14 to the reference data set. In this embodiment, the reference data set represents the first acquired image. In other embodiments, the reference data set represents an image acquired from other apparatus, such as a Computed Tomography (CT) scanner, a Positron Emission Tomography (PET) scanner, ultrasound apparatus or X-ray apparatus and with which images acquired from the MRI scanner are to be registered or conformed. In another embodiment, the reference data set represents a library image, e.g. as might be conveyed to the CPU or GPU from the PACS system 20.

The affine transformation applied in the present process has variables for performing: translations in each of three mutually orthogonal directions, i.e. x, y and z directions; rotation about each of three mutually orthogonal axes, i.e. x, y and z axes; scales along each of three mutually orthogonal directions, i.e. x, y and z directions; and a shear along each pair of pairs of three mutually orthogonal directions, i.e. x, y and z directions. Thus, the affine transformation consists of twelve variables. The steps taken to generate the present affine transformation using Maple are set out in Appendix B. The affine transformation is applied repeatedly to the reference data set with values of the variables in the affine transformation being changed from application to application such that a different candidate data set is generated each application. The repeated application of the affine transformation generates in the region of 500,000 to 1,000,000 candidate data sets 32, which are stored in the data store 16. A warp can be used as an alternative to the affine transformation. More specifically an elastic transform, such as a thin plate spline, is used. An example of a thin plate spline is provided in
http:mathworld.wolfram.com/ThinPlatespline.html.

Each of the candidate data sets is then formatted. Affine transformation of a square reference data set may, for example, produce a candidate data set in the form of a parallelogram having angles that are less than or greater than 90 degrees. Thus, the elements of a candidate data set will not have the same spatial disposition as elements of the square reference data set or elements of a square subject data set. More specifically, if the candidate data set were to be superimposed upon a subject data set their elements would not coincide. Therefore, the formatting step changes the elements of each candidate data set such that they have the same spatial disposition as elements of the square reference and subject data sets. Each element of the candidate data set is changed by linear interpolation between the element to be changed and neighbouring elements to determine a value for the changed element at its new location.

Each of the candidate data sets is compressed 34 using a compression process described below. Also, each of second and subsequent acquired data sets, which represent the second and subsequent acquired images; is compressed 36 using the compression process. The compressed data sets are stored in the data store 16. As described in detail below each compressed data set contains twelve data elements.

The second compressed subject data set is compared with each of the compressed candidate data sets by means of an estimation of likelihood or a chi-squared test. The estimation of likelihood or chi-squared test approaches will be described no further as they are well known and will be readily applied to the present invention by the skilled reader. The comparison of compressed data sets with each other involves comparing data sets containing twelve elements and thus presents a significantly lighter computational burden than comparison of the uncompressed data sets, which involves comparing data sets containing 14155776 data elements. After the application of the estimation of likelihood or chi-squared test the best match or up to 100 closest matches are identified 38. Where the best match is identified the form of the affine transformation corresponding to the best match is identified 42 and the inverse of the transformation is applied to the second subject data set to register or bring the subject data set into registration with the first subject data set. The comparison and inverse transformation steps set out in the present paragraph are repeated in respect of each of the subsequent compressed subject data sets to bring each of the subsequent data sets into registration or conformity with the first subject data set. In the event that the best match is deemed insufficiently close according to the matching approach, the steps of Figure 2 are repeated on the basis of a larger number of candidate data steps being generated at the first step 32 such that a finer resolution of all possible distorted or shifted data sets is produced. A reconstruction of the part of the human or animal body that has been scanned by the MRI scanner is then formed from the registered and conformed subject data sets and displayed on the VDU 18. Alternatively the registered and conformed subject data sets are stored for later retrieval in the data store 16 or converted to DICOM format and conveyed in this format to the PAC system 20.

In a form of the invention, where closest matches are identified or where an improved best match is desired, Powell's method is applied to each of the closest matching uncompressed candidate data sets or the best matching uncompressed candidate data set to generate a further candidate data set or a corresponding number of further candidate data sets. The further candidate data set or each of the further candidate data sets is compared with the uncompressed subject data set undergoing registration by means of an estimation of likelihood or a chi-squared test (as described above) to determine the best match. Powell's method is an approach that will be well know to the skilled reader. Powell's method is described in detail in "Numerical Recipes", Press, Teukolsky, Vetterling and Flannery (CUP), section 10.7, p 509, "Direction Set Methods in Multidimensions".

In certain forms of the invention, each of the acquired images are filtered by means of a Gaussian filter having depth 5 mm, height 15 mm and width 15 mm before the steps of Figure 2 commence, each acquired image having depth 250 mm, height 250 mm and width 250 mm. The filter characteristics depend on the size of features in acquired images as well as the size of the acquired images. Filtering in effect blurs the images, which makes it easier to determine the best matching candidate data set.

The compression method according to the present invention will now be described. The data set being compressed is partially differentiated with respect to each of the variables of the affine transformation to obtain a rate of change of the data set with respect to each variable. For example, for the 'rotation about the x-axis' variable, a rotation of +1 degree is applied to the data set being compressed to form a first intermediate data set and a of -1 degree is applied to the data set being compressed to form a second intermediate data set. Then the difference between the first and second intermediate data sets is determined and divided by the difference between the +1 degree and -1 degree rotations, i.e. 2 degrees. The same approach is followed for each of the eleven other variables of the affine transform. The twelve rates of change that have been thus determined are $\mu_{,1}$ to $\mu_{,12}$. The twelve weighting vectors $b_1$ to $b_{12}$ are determined from:

$$b_1 = C^{-1}\,\mu_{,1}/\sqrt{\mu'_{,1}C^{-1}\,\mu_{,1}}$$

for the first weighting vector $b_1$ and from:

$$b_m = (C^{-1}\,\mu_{,m} - \sum_{q=1}^{m-1}(\mu'_{,m}b_q)b_q)/\sqrt{\mu'_{,m}C^{-1}\,\mu_{,m} - \sum_{q=1}^{m-1}(\mu'_{,m}b_q)^2}$$

for the second and subsequent weighting vectors $b_m$; m=1 ... M
where:

C is a noise covariance matrix having a value of $1/\sigma^2$ for each element in the main diagonal so as to represent white noise of a predetermined amplitude; a data set undergoing compression comprises N elements of data, the N elements of data being represented by a vector $x_i$, i=1, ... N; the plurality of variables comprise M variables; and the plurality of weighting vectors consist of M vectors $b_m$, m=1, ... M.

Each element of the compressed data set is then determined by dot product multiplication of each weighting vector with the data set being compressed.

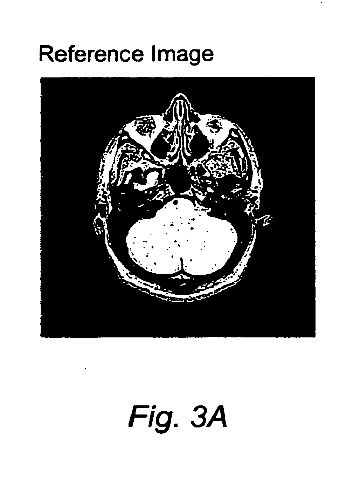

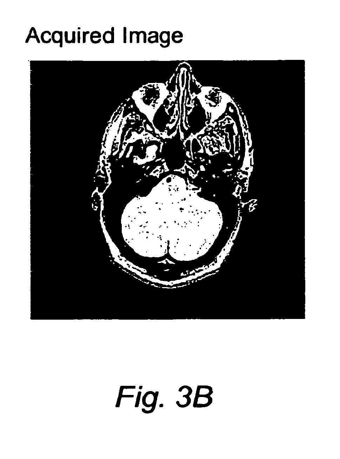

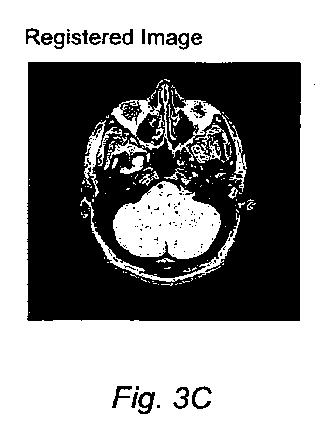

Figure 3A shows a reference or first acquired image of a human head from the MRI scanner 12 of Figure 1 as displayed on the VDU 18. Figure 3B shows a second acquired or subject image of the same human head from the MRI scanner. Comparison of Figures 3A and 3B show that the head shown in the image of Figure 3B is a distorted form of the image of Figure 3A. More specifically, the head of Figure 3B is rotated to the right and is elongated in a direction from the nose of the head to the back of the head. Figure 3C shows a registered and conformed form of the image of Figure 3B after completion of the process according to the present invention. Comparison of Figures 3A and 3C reveals the effectiveness of the present invention.

**Appendix A**

**Data Compression and the compression algorithm**

The compression algorithm allows rapid analysis of large datasets through a compression method which is, in most cases, lossless. This chapter contains a summary of the technique developed in TTH, HJL00, RJH01.

**1.1 The Compression Algorithm**

**1.1.1 An Introduction to Data Compression**

Fundamentally, the ideal goal of data compression techniques for parameter estimation is to recover information from a compressed dataset that has the same quality as the information which could be recovered from the original, full dataset. the algorithm assumes that the data, written as a vector, consists of signal, $\mu$, and noise, $\mathbf{n}$, components

$$\mathbf{x} = \mu + \mathbf{n}. \qquad\qquad (1.1)$$

If we assume that the noise causes the data to be randomly distributed around the signal with $\langle \mathbf{n} \rangle = 0$, it follows that,

$$\langle \mathbf{x} \rangle = \mu. \qquad\qquad (1.2)$$

If noise is assumed to be Gaussian, it can be completely described by the covariance matrix, $C$, with components $C_{ij} = \langle n_i n_j \rangle$. For the remainder of this section, the indices $i$, $j$ refer to data pixels and $\alpha, \beta$ to parameters. I first consider general linear compression of the data vector $x$, then focus on the particular compression used by the compression algorithm. This compression is designed to retain as much information (ideally all) about the pretermined parameters as possible.

**Linear Combinations of Data**

Let $y$ be a vector of linear combinations of the data, produced by multiplying the data vector $x$ by the matrix of weighting vectors $B$. Using this nomenclature we can describe the data, its mean and its variance:

$$y_i = B_{ij} x_j \qquad\qquad (1.3)$$

$$\langle y_i \rangle = B_{ij} \langle x_j \rangle, \langle y \rangle = B\ \mu \qquad\qquad (1.4)$$

$$\langle(y_i - <y_i>)(y_j - <y_j>)\rangle = \langle(B_{il}x_l - B_{il}\,\mu_l)(B_{jk}x_k - B_{jk}\,\mu_k)\rangle \quad (1.5)$$

$$= B_{il}B_{jk}[\langle x_l x_k\rangle + \mu_l\,\mu_k - \langle x_l\rangle\,\mu_k - \mu_l\langle x_k\rangle] \quad (1.6)$$

$$= B_{il}B_{jk}[\langle x_l x_k\rangle + \mu_l\,\mu_k - \mu_l\,\mu_k - \mu_l\,\mu_k] \quad (1.7)$$

$$= B_{il}B_{jk}C_{lk} = B_{il}C_{lk}B'_{kj} \quad (1.8)$$

$B_{il}C_{lk}B'_{kj}$ will appear many times in the following description, and from here onwards will be written *BCB'*. *C* is the covariance matrix of the data *x*:

$$C_{lk} = \langle(x_l - \mu_l)(x_k - \mu_k)\rangle = \langle x_l x_k\rangle - \mu_l\,\mu_k. \quad (1.9)$$

These definitions are valid for any weighting vector. In the special case of *B* being square and non-singular, it is possible to reconstruct the data completely from the *y* vector since *B* is invertible - although it is the same length as *x* so there is zero compression. Although reducing the length of *y* will reduce the size of the dataset, it will not necessarily lose information about parameters which may be extracted from those data. Since we are more interested in the information that can be extracted from the data than the data itself, we can use the Fisher matrix to determine how much *information* we lose when we use some combinations of the data determined by *B*.

### 1.1.3 Compression with the algorithm

If the matrix *B* consists of only one row we can write it as *b,* a vector. In this case *BCB'* is *bCb',* the product of a vector, a square matrix and a vector - a number. Putting this into the equation above,

$$F_{\alpha\beta} = \left[\frac{(b.\,\mu'_{,\alpha})(b.\,\mu'_{,\beta})}{bCb'}\right]. \quad (1.35)$$

Earlier the conditional error on $\theta_\alpha$ was determined to be $F_{\alpha\alpha}^{-\frac{1}{2}}$. To minimize this error we need to maximize $F_{\alpha\alpha}$;

$$F_{\alpha\alpha} = \left[\frac{(b.\,\mu_{,\alpha})^2}{(bCb')}\right]. \quad (1.36)$$

Maximizing $F_{\alpha\alpha}$ subject to the condition that *bCb'* = constant = 1, can be achieved with a Lagrange multiplier $\lambda$:

$$\frac{\partial}{\partial b_l}\left([b_j(\,\mu_{,\alpha})_j]^2 - \lambda b_j C_{jl}b_l\right) = 0 \quad (1.37)$$

$$2[b_j(\,\mu_{,a})_j] - \lambda C_{il}b_l - \lambda b_j C_{ji} = 0. \qquad (1.38)$$

since $C$ is symmetric, $C_{ij} = C_{ji}$.

$$\Rightarrow \underbrace{b_j(\,\mu_{,a})'_j(\,\mu_{,a})_i}_{M_{ij}} = \lambda C_{il}b_l \qquad (1.39)$$

$$M_{ij}b_j = \lambda C_{il}b_l \qquad (1.40)$$

$$Mb = \lambda Cb. \qquad (1.41)$$

This is a generalized eigenvalue problem. Since $C$ is by definition a square and symmetric matrix, it can be diagonalized. The resultant matrix would contain the variances of the rotated set, which must all be positive (the eigenvalues along the diagonal are the variances of the now orthogonal data). Since the eigenvalues do not change under rotation, the matrix is positive definite (all terms must be greater than zero). Such problems can be solved using the "Cholesky decomposition", $C = LL^t$, where $L$ is a lower triangular matrix.

$$Mb = \lambda \overbrace{LL'}^{C} b \qquad (1.42)$$

$$L^{-1}Mb = \lambda L'b \qquad (1.43)$$

$$L^{-1}M((L')^{-1}L')b = \lambda \underbrace{L'b}_{f} \qquad (1.44)$$

$$\underbrace{\left[L^{-1}M(L')^{-1}\right]}_{N} = \lambda f \qquad (1.45)$$

$$Nf = \lambda f. \qquad (1.46)$$

This is an ordinary eigenvalue problem, and can be expanded to

$$(L^{-1}\mu_{,a})(\underbrace{\mu_{,a}(L')^{-1})L'}_{i}b = \lambda L'b \qquad (1.47)$$

$$(= \text{scalar})$$

$$\Rightarrow L'b \propto L^{-1}\mu_{,1} \qquad (1.48)$$

and setting $\lambda$ so that $bCb^t = 1$ as required:

$$b = \text{const.}(L^t)^{-1} L^{-1} \mu_{,1} \qquad (1.49)$$

$$b_1 = \text{const.} C^{-1} \mu_{,1} \qquad (1.50)$$

which, when normalised, gives the solution

$$b_1 = C^{-1} \mu_{,1} / \sqrt{\mu'_{,1} C^{-1} \mu_{,1}}. \qquad (1.51)$$

Putting this solution into our original compression equation, we get a compressed data set which consists of only one number, $y_1$, such that

$$y_1 = b_1.x. \qquad (1.52)$$

In addition, the solution appears to work as expected in the simple uncorrelated case, giving high weight to those data which are most sensitive to the parameters (large changes in $\mu$) and low weight to those that are noisy (small $C^{-1}$ elements). To determine how good the compression is, we need to compare the Fisher matrix elements for the complete and compressed data sets. Substituting $b_1$ into equation 1.35 gives

$$F_{11} = \mu'_{,1} C^{-1} \mu_{,1} \qquad (1.53)$$

which, given $C$ is independent of $\theta$, is identical to the Fisher matrix element when using the full data set. This means that the compression from the whole dataset to a single number is lossless in this sense.

### Caveat

It is important to realize that the compression algorithm allows information to be recovered from an optimally compressed dataset - it is perhaps most accurately described as an information compression method. Its purpose is not to recover the initial data, but to recover parameters which depend on that initial data. By comparing the Fisher matrix of the data before and after compression, it is shown that the method can be lossless in terms of *information* although this is not the same as lossless in terms of *data.*

### Two parameters

The method outlined above shows how one parameter can be extracted from a dataset. Although this is useful, a more common application would be the calculation of several parameters simultaneously. In order to perform such an analysis a second number, $y_2$, is used to encapsulate the information from the data about the second parameter, $\theta_2$. In a similar manner to $y_1$,

$$y_2 \equiv b'_2 x. \qquad (1.54)$$

By construction, $y_2$ is chosen to be uncorrelated with $y_1$ -- this condition is satisfied if $b'_2 C b_1 = 0.$ It must also contain as much information as possible about $\theta_2$. As explained in HJL00, this requires two Lagrange multipliers ($b_2$ is normalized by setting $b'_2 C b_2$ = 1). This gives

$$b_2 = (C^{-1} \mu_{.2} - (\mu'_{.2}b_1)b_1) / \sqrt{\mu'_{.2}C^{-1} \mu_{.2} - (\mu'_{.2}b_1)^2}. \qquad (1.55)$$

It is possible to generalize this solution to $M$ parameters - this requires $M$ orthogonal vectors $b_m$, $m = 1,... M$, with each $y_m$ containing as much information as possible about its corresponding $\theta_M$ not already contained in $y_q$, $q < m$. This is essentially the Gram-Schmidt orthogonalisation modified by using $C$ as the curved metric tensor to give the general solution:

$$b_m = (C^{-1} \mu_{.m} - \sum_{q=1}^{m-1} (\mu'_{.m}b_q)b_q) / \sqrt{\mu'_{.m}C^{-1} \mu_{.m} - \sum_{q=1}^{m-1} (\mu'_{.m}b_q)^2}. \qquad (1.56)$$

The remarkable features of this solution are that

- The data compression can be massive
- There are as many y values as parameters
- The Fisher matrix is unchanged by the data compression

A proof that this method is lossless for many parameters is given in the appendix of HJL00. It is important to note that the b-vectors are not unique: they will depend on the order of the parameters. It was shown in RJH01 that this did not influence recovered parameters.

**References:**

HJL00: Heavens,A.F.,Jimenez,R.,Lahav,O.2000,MNRAS,317,965
RJH01: Reichardt,C.,Jimenez,R.,Heavens,A.F.2001,MNRAS,327,849
TTH: Tegmark,M.,Taylor,A.N.,Heavens,A.F.1997,ApJ,480,22

**Appendix B**

*with( linalg);*
*[BlockDiagonal, GramSchmidt, JordanBlock, LUdecomp, QRdecomp, Wronskian,*    (1)
   *addcol, addrow, adj, adjoint, angle, augment, backsub, band, basis, bezout,*
   *blockmatrix, charmat, charpoly, cholesky, col, coldim, colspace, colspan,*
   *companion, concat, cond, copyinto, crossprod, curl, definite, delcols, delrows, det,*
   *diag, diverge, dotprod, eigenvals, eigenvalues, eigenvectors, eigenvects,*
   *entermatrix, equal, exponential, extend, ffgausselim, fibonacci, forwardsub,*
   *frobenius, gausselim, gaussjord, geneqns, genmatrix, grad, hadamard, hermite,*
   *hessian, hilbert, htranspose, ihermite, indexfunc, innerprod, intbasis, inverse,*
   *ismith, issimilar, iszero, jacobian, jordan, kernel, laplacian, leastsqrs, linsolve,*
   *matadd, matrix, minor, minpoly, mulcol, mulrow, multiply, norm, normalize,*
   *nullspace, orthog, permanent, pivot, potential, randmatrix, randvector, rank,*
   *ratform, row, rowdim, rowspace, rowspan, rref, scalarmul, singularvals, smith,*
   *stackmatrix, submatrix, subvector, sumbasis, swapcol, swaprow, sylvester,*
   *toeplitz, trace, transpose, vandermonde, vecpotent, vectdim, vector, wronskian]*

$$T := matrix(4, 4, [1, 0, 0, tx, 0, 1, 0, ty, 0, 0, 1, tz, 0, 0, 0, 1]);$$

$$\begin{bmatrix} 1 & 0 & 0 & tx \\ 0 & 1 & 0 & ty \\ 0 & 0 & 1 & tz \\ 0 & 0 & 0 & 1 \end{bmatrix} \tag{2}$$

$$Rx := matrix(4, 4, [1, 0, 0, 0, 0, \cos(a), \sin(a), 0, 0, -\sin(a), \cos(a), 0, 0, 0, 0, 1]);$$

$$\begin{bmatrix} 1 & 0 & 0 & 0 \\ 0 & \cos(a) & \sin(a) & 0 \\ 0 & -\sin(a) & \cos(a) & 0 \\ 0 & 0 & 0 & 1 \end{bmatrix} \tag{3}$$

$$Ry := matrix(4, 4, [\cos(b), 0, -\sin(b), 0, 0, 1, 0, 0, \sin(b), 0, \cos(b), 0, 0, 0, 0, 1]);$$

$$\begin{bmatrix} \cos(b) & 0 & -\sin(b) & 0 \\ 0 & 1 & 0 & 0 \\ \sin(b) & 0 & \cos(b) & 0 \\ 0 & 0 & 0 & 1 \end{bmatrix} \tag{4}$$

$$Rz := matrix(4, 4, [\cos(c), \sin(c), 0, 0, -\sin(c), \cos(c), 0, 0, 0, 0, 1, 0, 0, 0, 0, 1]);$$

$$\begin{bmatrix} \cos(c) & \sin(c) & 0 & 0 \\ -\sin(c) & \cos(c) & 0 & 0 \\ 0 & 0 & 1 & 0 \\ 0 & 0 & 0 & 1 \end{bmatrix} \tag{5}$$

$$K := matrix(4, 4, [1, kxy, kxz, 0, 0, 1, kyz, 0, 0, 0, 1, 0, 0, 0, 0, 1]);$$

$$\begin{bmatrix} 1 & kxy & kxz & 0 \\ 0 & 1 & kyz & 0 \\ 0 & 0 & 1 & 0 \\ 0 & 0 & 0 & 1 \end{bmatrix} \tag{6}$$

$$S := matrix(4, 4, [sx, 0, 0, 0, 0, sy, 0, 0, 0, 0, sz, 0, 0, 0, 0, 1]);$$

$$\begin{bmatrix} sx & 0 & 0 & 0 \\ 0 & sy & 0 & 0 \\ 0 & 0 & sz & 0 \\ 0 & 0 & 0 & 1 \end{bmatrix} \tag{7}$$

$$tmp := multiply(K, S);$$

$$\begin{bmatrix} sx & kxy\,sy & kxz\,sz & 0 \\ 0 & sy & kyz\,sz & 0 \\ 0 & 0 & sz & 0 \\ 0 & 0 & 0 & 1 \end{bmatrix} \tag{8}$$

*tmpR := multiply(Ry, Rz);*

$$\begin{bmatrix} \cos(b)\cos(c) & \cos(b)\sin(c) & -\sin(b) & 0 \\ -\sin(c) & \cos(c) & 0 & 0 \\ \sin(b)\cos(c) & \sin(b)\sin(c) & \cos(b) & 0 \\ 0 & 0 & 0 & 1 \end{bmatrix} \tag{9}$$

*R := multiply(Rx, tmpR);*

$$\begin{bmatrix} [\cos(b)\cos(c), \cos(b)\sin(c), -\sin(b), 0], [-\cos(a)\sin(c) + \sin(a)\sin(b)\cos(c), \\ \\ \cos(a)\cos(c) + \sin(a)\sin(b)\sin(c), \sin(a)\cos(b), 0], [ \\ \sin(a)\sin(c) + \cos(a)\sin(b)\cos(c), -\sin(a)\cos(c) + \cos(a)\sin(b)\sin(c), \\ \\ \cos(a)\cos(b), 0], [0, 0, 0, 1] \end{bmatrix} \tag{10}$$

*tmp2 := multiply(R, tmp);*

$$\begin{bmatrix} [\cos(b)\cos(c)\,sx, \cos(b)\cos(c)\,kxy\,sy + \cos(b)\sin(c)\,sy, \\ \\ \cos(b)\cos(c)\,kxz\,sz + \cos(b)\sin(c)\,kyz\,sz - \sin(b)\,sz, 0], [ \\ (-\cos(a)\sin(c) + \sin(a)\sin(b)\cos(c))\,sx, \\ (-\cos(a)\sin(c) + \sin(a)\sin(b)\cos(c))\,kxy\,sy + (\cos(a)\cos(c) \\ + \sin(a)\sin(b)\sin(c))\,sy, \\ (-\cos(a)\sin(c) + \sin(a)\sin(b)\cos(c))\,kxz\,sz + (\cos(a)\cos(c) \\ + \sin(a)\sin(b)\sin(c))\,kyz\,sz + \sin(a)\cos(b)\,sz, 0], [ \\ (\sin(a)\sin(c) + \cos(a)\sin(b)\cos(c))\,sx, \\ (\sin(a)\sin(c) + \cos(a)\sin(b)\cos(c))\,kxy\,sy + (-\sin(a)\cos(c) \\ + \cos(a)\sin(b)\sin(c))\,sy, \\ (\sin(a)\sin(c) + \cos(a)\sin(b)\cos(c))\,kxz\,sz + (-\sin(a)\cos(c) \\ \\ + \cos(a)\sin(b)\sin(c))\,kyz\,sz + \cos(a)\cos(b)\,sz, 0], [0, 0, 0, 1] \end{bmatrix} \tag{11}$$

$A := multiply(T, tmp2);$

$$[\cos(b)\cos(c)\,sx,\ \cos(b)\cos(c)\,kxy\,sy + \cos(b)\sin(c)\,sy, \qquad (12)$$

$\cos(b)\cos(c)\,kxz\,sz + \cos(b)\sin(c)\,kyz\,sz - \sin(b)\,sz,\ tx],\ [$
$(-\cos(a)\sin(c) + \sin(a)\sin(b)\cos(c))\,sx,$
$(-\cos(a)\sin(c) + \sin(a)\sin(b)\cos(c))\,kxy\,sy + (\cos(a)\cos(c)$
$+ \sin(a)\sin(b)\sin(c))\,sy,$
$(-\cos(a)\sin(c) + \sin(a)\sin(b)\cos(c))\,kxz\,sz + (\cos(a)\cos(c)$
$+ \sin(a)\sin(b)\sin(c))\,kyz\,sz + \sin(a)\cos(b)\,sz,\ ty],\ [$
$(\sin(a)\sin(c) + \cos(a)\sin(b)\cos(c))\,sx,$
$(\sin(a)\sin(c) + \cos(a)\sin(b)\cos(c))\,kxy\,sy + (-\sin(a)\cos(c)$
$+ \cos(a)\sin(b)\sin(c))\,sy,$
$(\sin(a)\sin(c) + \cos(a)\sin(b)\cos(c))\cdot kxz\,sz + (-\sin(a)\cos(c)$

$+ \cos(a)\sin(b)\sin(c))\,kyz\,sz + \cos(a)\cos(b)\,sz,\ tz],\ [0, 0, 0, 1]$

## Claims

1. A process of bringing at least one subject data set into registration or conformity with a reference data set by electronic methods, each of the subject and reference data sets being a representation of a physical object, the process comprising:

   generating each of a plurality of candidate data sets by applying a transformation to the reference data set, the transformation having predetermined variables that are changed such that each of the plurality of candidate data sets is a differently shifted or distorted reference data set;
   compressing each of the plurality of candidate data sets to form a respective compressed candidate data set and compressing a subject data set to form a compressed subject data set, the step of compressing comprising:
   determining a plurality of weighting vectors in dependence upon the predetermined variables, the number of weighting vectors being equal to the number of predetermined variables; multiplying all data in a candidate or subject data set by each weighting vector to provide respective, corresponding data elements of the compressed candidate or subject data set;
   comparing the compressed subject data set with each of the compressed candidate data sets and, in dependence on the comparisons, determining the transformation that has generated the candidate data set corresponding to the compressed candidate data set, which, of the plurality of compressed candidate data sets, provides a best match with the compressed subject data set; and
   applying an inverse of the determined transformation to the subject data set, **characterised in that**:

   the step of determining a plurality of weighting vectors comprises determining a rate of change of a data set, which is undergoing compression, with respect to at least one of the predetermined variables.

2. A process according to claim 1, in which each of the plurality of weighting vectors is determined in dependence on a rate of change of the data set with respect to a respective one of the predetermined variables.

3. A process according to claim 1 or 2, in which a rate of change of a data set is determined by: applying each of a plurality of predetermined values for a predetermined variable to the data set to form corresponding intermediate data sets; and determining the rate of change on the basis of the intermediate data sets.

4. A process according to claim 3, in which a rate of change of a data set is determined by: applying a predetermined value that is lower than a nominal value and a predetermined value that is higher than a nominal value for a predetermined variable to the data set to form a first intermediate data set and a second intermediate data set respectively; determining a difference between the first intermediate data set and the second intermediate data set to form a difference data set; and dividing the difference data set by a difference between the lower and the higher predetermined values.

5. A process according to any preceding claim, in which a first weighting vector is determined in dependence on a first rate of change determined with respect to a first predetermined variable and a second weighting vector is determined in dependence on the first weighting vector and a second rate of change determined with respect to a second predetermined variable.

6. A process according to claim 5, in which the second weighting vector is determined in dependence on subtraction of a product of the first weighting vector and a transpose of the second rate of change from the second rate of change.

7. A process according to claim 5 or 6, in which a subsequent weighting vector is determined in dependence on: summing products of each previously determined weighting vector with a transpose of the subsequent rate of change; and subtracting the summation from the subsequent rate of change.

8. A process according to any preceding claim, in which a first weighting vector is:

$$b_1 = C^{-1} \, \mu_{,1} / \sqrt{ \mu'_{,1} C^{-1} \, \mu_{,1} }$$

and each subsequent weighting vector is:

$$b_m = (C^{-1} \, \mu_{,m} - \sum_{q=1}^{m-1} ( \mu'_{,m} b_q) b_q ) / \sqrt{ \mu'_{,m} C^{-1} \, \mu_{,m} - \sum_{q=1}^{m-1} ( \mu'_{,m} b_q)^2 }$$

where C is a noise covariance matrix and $\mu_,$ is the rate of change.

9. A process according to any preceding claim, in which the step of multiplying all data in a candidate or subject data set by each weighting vector comprises computing the scalar product of the data set and each weighting vector to provide the corresponding, respective data elements.

10. A process according to any preceding claim, in which the transformation is one of: an affine transformation; and a warp transformation.

11. A process according to any preceding claim, in which a representation is an image of a physical object.

12. A process according to any preceding claim further comprising providing a registered or conforming data set in dependence upon the step of applying the inverse of the determined transformation.

13. A computer program comprising program instructions for causing a computer to perform the process according to any preceding claim.

14. A computer system comprising program instructions for causing a computer to perform the process according to any one of claims 1 to 12.

15. Electrical apparatus operative to bring at least one subject data set into registration or conformity with a reference data set according the process of any one of claims 1 to 12, the electrical apparatus comprising a digital processor and a data store, the digital processor being operative to carry out the steps of: generating each of the plurality of candidate data sets; compressing each of the plurality of data sets and compressing the subject data set; comparing the compressed subject data set with each of the compressed candidate data sets; and applying the inverse of the determined transformation, and the data store being operative to store: the at least one subject data set and the reference data set; the plurality of candidate data sets; and the compressed data sets.

**Patentansprüche**

1. Ein Verfahren zum Zur-Deckung- oder Zur-Konformität-Bringen mindestens eines Subjektdatensatzes mit einem Referenzdatensatz durch elektronische Methoden, wobei jeder der Subjekt- und Referenzdatensätze eine Repräsentation eines physischen Objekts ist, wobei das Verfahren Folgendes beinhaltet:

   Erzeugen jedes einer Vielzahl von Kandidatendatensätzen durch Anwenden einer Transformation auf den Referenzdatensatz, wobei die Transformation vorher bestimmte Variablen aufweist, die verändert werden, so dass jeder der Vielzahl von Kandidatendatensätzen ein unterschiedlich verschobener oder verformter Referenzdatensatz ist;
   Komprimieren jedes der Vielzahl von Kandidatendatensätzen, um einen jeweiligen komprimierten Kandidatendatensatz zu bilden, und Komprimieren eines Subjektdatensatzes, um einen komprimierten Subjektdatensatz zu bilden, wobei der Schritt des Komprimierens Folgendes beinhaltet: Bestimmen einer Vielzahl von Gewichtungsvektoren in Abhängigkeit von den vorher bestimmten Variablen, wobei die Anzahl der Gewichtungsvektoren gleich der Anzahl vorher bestimmter Variablen ist; Multiplizieren aller Daten in einem Kandidaten- oder Subjektdatensatz mit jedem Gewichtungsvektor, um jeweilige, entsprechende Datenelemente des komprimierten Kandidaten- oder Subjektdatensatzes bereitzustellen;
   Vergleichen des komprimierten Subjektdatensatzes mit jedem der komprimierten Kandidatendatensätze und, in Abhängigkeit von den Vergleichen, Bestimmen der Transformation, die den Kandidatendatensatz erzeugt hat, welcher dem komprimierten Kandidatendatensatz, der aus der Vielzahl von komprimierten Kandidatendatensätzen eine beste Übereinstimmung mit dem komprimierten Subjektdatensatz bereitstellt, entspricht; und
   Anwenden einer Umkehrfunktion der bestimmten Transformation auf den Subjektdatensatz, **dadurch gekennzeichnet, dass**:

   der Schritt des Bestimmens einer Vielzahl von Gewichtungsvektoren das Bestimmen einer Änderungsrate eines Datensatzes, der Komprimierung erfährt, in Bezug auf mindestens eine der vorher bestimmten Variablen beinhaltet.

2. Verfahren gemäß Anspruch 1, bei dem jeder der Vielzahl von Gewichtungsvektoren in Abhängigkeit von einer Änderungsrate des Datensatzes in Bezug auf eine entsprechende der vorher bestimmten Variablen bestimmt wird.

3. Verfahren gemäß Anspruch 1 oder 2, bei dem eine Änderungsrate eines Datensatzes durch Folgendes bestimmt wird: Anwenden jedes einer Vielzahl von vorher bestimmten Werten für eine vorher bestimmte Variable auf den Datensatz, um entsprechende Zwischendatensätze zu bilden; und Bestimmen der Änderungsrate auf der Basis der Zwischendatensätze.

4. Verfahren gemäß Anspruch 3, bei dem eine Änderungsrate eines Datensatzes durch Folgendes bestimmt wird: Anwenden eines vorher bestimmten Werts, der niedriger als ein nomineller Wert ist, und eines vorher bestimmten Werts, der höher als ein nomineller Wert ist, für eine vorher bestimmte Variable auf den Datensatz, um jeweils einen ersten Zwischendatensatz und einen zweiten Zwischendatensatz zu bilden; Bestimmen einer Differenz zwischen dem ersten Zwischendatensatz und dem zweiten Zwischendatensatz, um einen Differenzdatensatz zu bilden; und Dividieren des Differenzdatensatzes durch eine Differenz zwischen dem niedrigeren und dem höheren vorher bestimmten Wert.

5. Verfahren gemäß einem der vorhergehenden Ansprüche, bei dem ein erster Gewichtungsvektor in Abhängigkeit von einer ersten Änderungsrate, die in Bezug auf eine erste vorher bestimmte Variable bestimmt wird, und ein zweiter Gewichtungsvektor in Abhängigkeit von dem ersten Gewichtungsvektor und einer zweiten Änderungsrate, die in Bezug auf eine zweite vorher bestimmte Variable bestimmt wird, bestimmt wird.

6. Verfahren gemäß Anspruch 5, bei dem der zweite Gewichtungsvektor in Abhängigkeit von einer Subtraktion eines Produkts des ersten Gewichtungsvektors und einer Transponierten der zweiten Änderungsrate aus der zweiten Änderungsrate bestimmt wird.

**7.** Verfahren gemäß Anspruch 5 oder 6, bei dem ein nachfolgender Gewichtungsvektor in Abhängigkeit von Folgendem bestimmt wird: Summieren von Produkten jedes zuvor bestimmten Gewichtungsvektors mit einer Transponierten der nachfolgenden Änderungsrate; und Subtrahieren der Summierung von der nachfolgenden Änderungsrate.

**8.** Verfahren gemäß einem der vorhergehenden Ansprüche, bei dem ein erster Gewichtungsvektor folgender ist:

$$b_1 = C^{-1}\ \mu_{,1}/\sqrt{\mu_{,1}^{t}C^{-1}\ \mu_{,1}}$$

und jeder nachfolgende Gewichtungsvektor folgender ist:

$$b_m = (C^{-1}\ \mu_{,m} - \sum_{q=1}^{m-1}(\mu_{,m}^{t}b_q)b_q)/\sqrt{\mu_{,m}^{t}C^{-1}\ \mu_{,m} - \sum_{q=1}^{m-1}(\mu_{,m}^{t}b_q)^2}$$

wobei C eine Rauschkovarianzmatrix und $\mu$, die Änderungsrate ist.

**9.** Verfahren gemäß einem der vorhergehenden Ansprüche, bei dem der Schritt des Multiplizierens aller Daten in einem Kandidaten- oder Subjektdatensatz mit jedem Gewichtungsvektor das Berechnen des Skalarprodukts des Datensatzes und jedes Gewichtungsvektors beinhaltet, um die entsprechenden, jeweiligen Datenelemente bereitzustellen.

**10.** Verfahren gemäß einem der vorhergehenden Ansprüche, bei dem die Transformation eine der folgenden ist: eine Affintransformation; und eine Verzerrungstransformation.

**11.** Verfahren gemäß einem der vorhergehenden Ansprüche, bei dem eine Repräsentation eine Abbildung eines physischen Objekts ist.

**12.** Verfahren gemäß einem der vorhergehenden Ansprüche, das ferner das Bereitstellen eines in Deckung befindlichen oder konformen Datensatzes in Abhängigkeit von dem Schritt des Anwendens der Umkehrfunktion der bestimmten Transformation beinhaltet.

**13.** Ein Computerprogramm, das Programmbefehle zum Herbeiführen des Durchführens des Verfahrens gemäß einem der vorhergehenden Ansprüche durch einen Computer beinhaltet.

**14.** Ein Computersystem, das Programmbefehle zum Herbeiführen des Durchführens des Verfahrens gemäß einem der Ansprüche 1 bis 12 durch einen Computer beinhaltet.

**15.** Ein elektrisches Gerät, das betriebsfähig ist, um mindestens einen Subjektdatensatz gemäß dem Verfahren gemäß einem der Ansprüche 1 bis 12 mit einem Referenzdatensatz zur Deckung oder Konformität zu bringen, wobei das elektrische Gerät einen digitalen Prozessor und einen Datenspeicher beinhaltet, wobei der digitale Prozessor betriebsfähig ist, um die folgenden Schritte auszuführen: Erzeugen jedes der Vielzahl von Kandidatendatensätzen; Komprimieren jedes der Vielzahl von Datensätzen und Komprimieren des Subjektdatensatzes; Vergleichen des komprimierten Subjektdatensatzes mit jedem der komprimierten Kandidatendatensätze; und Anwenden der Umkehrfunktion der bestimmten Transformation, und wobei der Datenspeicher betriebsfähig ist, um Folgendes zu speichern: den mindestens einen Subjektdatensatz und den Referenzdatensatz; die Vielzahl von Kandidatendatensätzen; und die komprimierten Datensätze.

**Revendications**

**1.** Un procédé pour amener au moins un ensemble de données sujet en coïncidence ou en conformité avec un ensemble de données référence par des méthodes électroniques, chaque ensemble parmi les ensembles de données sujet et référence étant une représentation d'un objet physique, le procédé comprenant :

la génération de chaque ensemble parmi une pluralité d'ensembles de données candidats en appliquant une transformation à l'ensemble de données référence, la transformation ayant des variables prédéterminées qui sont changées de telle sorte que chaque ensemble parmi la pluralité d'ensembles de données candidats soit un ensemble de données référence décalé ou déformé de façon différente ;

la compression de chaque ensemble parmi la pluralité d'ensembles de données candidats pour former un ensemble de données candidat comprimé respectif et la compression d'un ensemble de données sujet pour former un ensemble de données sujet comprimé, l'étape consistant à comprimer comprenant : la détermination d'une pluralité de vecteurs de pondération en subordination à des variables prédéterminées, le nombre de vecteurs de pondération étant égal au nombre de variables prédéterminées ; la multiplication de toutes les données dans un ensemble de données candidat ou sujet par chaque vecteur de pondération pour fournir des éléments de données correspondants respectifs de l'ensemble de données candidat ou sujet comprimé ;

la comparaison de l'ensemble de données sujet comprimé à chaque ensemble de données candidat comprimé des ensembles de données candidats comprimés et,

en subordination à des comparaisons, la détermination de la transformation qui a généré l'ensemble de données candidat correspondant à l'ensemble de données candidat comprimé, lequel, parmi la pluralité d'ensembles de données candidats comprimés, fournit la meilleure équivalence avec l'ensemble de données sujet comprimé ; et

l'application d'un inverse de la transformation déterminée à l'ensemble de données sujet, **caractérisé en ce que** :

l'étape consistant à déterminer une pluralité de vecteurs de pondération comprend la détermination d'un taux de changement d'un ensemble de données, lequel subit une compression, par rapport à au moins l'une des variables prédéterminées.

2. Un procédé selon la revendication 1, dans lequel chaque vecteur parmi la pluralité de vecteurs de pondération est déterminé en subordination à un taux de changement de l'ensemble de données par rapport à une variable prédéterminée respective des variables prédéterminées.

3. Un procédé selon la revendication 1 ou la revendication 2, dans lequel un taux de changement d'un ensemble de données est déterminé par : l'application de chaque valeur parmi une pluralité de valeurs prédéterminées pour une variable prédéterminée à l'ensemble de données pour former des ensembles de données intermédiaires correspondants ; et la détermination du taux de changement sur la base des ensembles de données intermédiaires.

4. Un procédé selon la revendication 3, dans lequel un taux de changement d'un ensemble de données est déterminé par : l'application d'une valeur prédéterminée qui est inférieure à une valeur nominale et d'une valeur prédéterminée qui est supérieure à une valeur nominale pour une variable prédéterminée à l'ensemble de données pour former un premier ensemble de données intermédiaire et un deuxième ensemble de données intermédiaire respectivement ; la détermination d'une différence entre le premier ensemble de données intermédiaire et le deuxième ensemble de données intermédiaire pour former un ensemble de données de différence ; et la division de l'ensemble de données de différence par une différence entre les valeurs prédéterminées inférieures et supérieures.

5. Un procédé selon n'importe quelle revendication précédente, dans lequel un premier vecteur de pondération est déterminé en subordination à un premier taux de changement déterminé par rapport à une première variable prédéterminée et un deuxième vecteur de pondération est déterminé en subordination au premier vecteur de pondération et à un deuxième taux de changement déterminé par rapport à une deuxième variable prédéterminée.

6. Un procédé selon la revendication 5, dans lequel le deuxième vecteur de pondération est déterminé en subordination à une soustraction d'un produit du premier vecteur de pondération et d'une transposée du deuxième taux de changement au deuxième taux de changement.

7. Un procédé selon la revendication 5 ou la revendication 6, dans lequel un vecteur de pondération subséquent est déterminé en subordination à : la somme des produits de chaque vecteur de pondération déterminé précédemment avec une transposée du taux de changement subséquent ; et la soustraction de la somme du taux de changement subséquent.

8. Un procédé selon n'importe quelle revendication précédente, dans lequel un premier vecteur de pondération est :

$$b_1 = C^{-1} \; \mu_{,1} / \sqrt{\mu_{,1}^t C^{-1} \; \mu_{,1}}$$

et chaque vecteur de pondération subséquent est :

$$b_m = (C^{-1} \; \mu_{,m} - \sum_{q=1}^{m-1} (\mu_{,m}^t b_q) b_q) / \sqrt{\mu_{,m}^t C^{-1} \; \mu_{,m} - \sum_{q=1}^{m-1} (\mu_{,m}^t b_q)^2}$$

où C est une matrice de covariance de bruit et $\mu$ est le taux de changement.

9. Un procédé selon n'importe quelle revendication précédente, dans lequel l'étape consistant à multiplier toutes les données dans un ensemble de données candidat ou sujet par chaque vecteur de pondération comprend le calcul du produit scalaire de l'ensemble de données et de chaque vecteur de pondération pour fournir les éléments de données correspondants respectifs.

10. Un procédé selon n'importe quelle revendication précédente, dans lequel la transformation est : soit une transformation affine ; soit une transformation warp.

11. Un procédé selon n'importe quelle revendication précédente, dans lequel une représentation est une image d'un objet physique.

12. Un procédé selon n'importe quelle revendication précédente comprenant en outre le fait de fournir un ensemble de données mis en coïncidence ou en conformité en subordination à l'étape consistant à appliquer l'inverse de la transformation déterminée.

13. Un programme informatique comprenant des instructions de programme destinées à amener un ordinateur à effectuer le procédé selon n'importe quelle revendication précédente.

14. Un système informatique comprenant des instructions de programme destinées à amener un ordinateur à effectuer le procédé selon n'importe laquelle des revendications 1 à 12.

15. Appareil électrique opérationnel pour amener au moins un ensemble de données sujet en enregistrement ou en conformité avec un ensemble de données référence selon le procédé de n'importe laquelle des revendications 1 à 12, l'appareil électrique comprenant un processeur numérique et une mémoire de données, le processeur numérique étant opérationnel pour réaliser les étapes consistant à : la génération de chaque ensemble parmi la pluralité d'ensembles de données candidats ; la compression de chaque ensemble parmi la pluralité d'ensembles de données et la compression de l'ensemble de données sujet ; la comparaison de l'ensemble de données sujet comprimé à chaque ensemble de données candidat comprimé des ensembles de données candidats comprimés ; et l'application de l'inverse de la transformation déterminée, et la mémoire de données étant opérationnelle pour mémoriser : cet au moins un ensemble de données sujet et l'ensemble de données référence ; la pluralité d'ensembles de données candidats ; et les ensembles de données comprimés.

*Fig. 1*

EP 2 218 054 B1

GENERATING CANDIDATE DATA SETS — 32

COMPRESSING CANDIDATE DATA SETS — 34

COMPRESSING SUBJECT DATA SET — 36

DETERMINING A BEST MATCH BETWEEN COMPRESSED SUBJECT DATASET AND COMPRESSED CANDIDATE DATA SETS — 38

DETERMINING TRANSFORMATION THAT FORMED THE BEST MATCHING COMPRESSED CANDIDATE DATA SET — 40

APPLYING THE INVERSE TRANSFORMATION TO THE SUBJECT DATA SET — 42

*Fig. 2*

Reference Image

*Fig. 3A*

Acquired Image

*Fig. 3B*

Registered Image

*Fig. 3C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Numerical Recipes. **POWELL.** Direction Set Methods in Multidimensions. Press, 509